# EUROPEAN PATENT SPECIFICATION

(11) **EP 3 094 478 B1**
(45) Date of publication and mention of the grant of the patent: **14.02.2018**
(21) Application number: 15700663.6
(22) Date of filing: 14.01.2015
(51) Int. Cl.: B29C 67/00

(54) **ADDITIVE MANUFACTURING SYSTEM FOR MANUFACTURING A THREE DIMENSIONAL OBJECT**
SYSTEM ZUR ADDITIVEN FERTIGUNG ZUR HERSTELLUNG EINES DREIDIMENSIONALEN OBJEKTS
SYSTÈME DE FABRICATION ADDITIVE POUR LA FABRICATION D'UN OBJET TRIDIMENSIONNEL

(30) Priority: 15.01.2014 NL 2012087
(43) Date of publication of application: 23.11.2016
(73) Proprietor: Admatec Europe B.V., 5056 GJ Moergestel (NL)
(72) Inventor: KUIJPERS, Petrus Adrianus Johannes Maria, NL-5066 GJ Moergestel (NL)
(74) Representative: Nederlandsch Octrooibureau
(86) International application number: PCT/EP2015/050561
(87) International publication number: WO 2015/107066

(56) References cited:
- WO-A1-00/30834
- JP-A- H0 872 153
- US-A- 5 192 559

## Description

### Field of the invention

The present invention relates to an additive manufacturing system, more particularly to an additive manufacturing system for manufacturing a three dimensional object as a stacked arrangement of cross sectional slices made of cured resin. More in particular, an additive manufacturing system for manufacturing a three dimensional object is provided, comprising a transparent foil substrate and a resin depositor for depositing a layer of curable resin on a first side of the foil substrate, the foil substrate being supported by a transparent support plate, a radiation source disposed on a second side of the foil substrate for radiation curing the resin layer on the first side of the foil substrate, wherein a cured resin layer represents a cross sectional slice of the object, a stage configured to hold a stacked arrangement of one or more cured resin layers representing at least in part the three dimensional object, and a positioning system for relative positioning the foil substrate and the stage.

### Prior art

International patent publication WO 2010/074566 discloses a method and apparatus layer wise production of a 3D tangible object. The system comprises a construction shape to form a curable liquid resin layer to be brought in contact with the tangible object. Solidifying means are provided for solidifying a predetermined area of a layer of the resin, so as to obtain a solid layer of the tangible object, wherein the solid layer has a predetermined shape. Further, separating means for separating the solid layer from the construction shape are provided, as wells as moving means for moving, relative to one another, the construction shape to a predetermined position relative to the tangible object for carrying out successive method cycles for solidifying a predetermined area of the resin. The system is further arranged to provide a limited volume of resin adhered to the construction shape to form a resin layer of limited height that does not contact the tangible object. Moving the construction shape and the solidification of the predetermined area are carried out simultaneously. In an embodiment, the construction shape is a thin foil having a curable resin layer disposed thereon.

The above additive manufacturing system has limited accuracy and resolution due to various image disturbances between a projected image of a cross sectional area to be modelled and the actual liquid layer to be solidified. For example, typical disturbances are optical scattering of light travelling through various optic lenses disposed in a light path between a projected cross sectional image and the liquid layer on the construction shape, such as a foil substrate.

European patent publication EP-A-2 199 067 discloses a method and apparatus for building a 3D model using layers of curable material. A foil is used to provide subsequent new layers of uncured material at the bottom of the semi-finished 3D model.

American patent publication US 5,192,559 discloses an additive manufacturing system in accordance with the preamble of claim 1 using a transparent foil substrate and a resin deposition unit, wherein the foil substrate is supported by a transparent support plate. A radiation source is positioned on a second side of the foil substrate for curing the resin layer. Furthermore, a holder is provided for the stacked resin layers.

Japanese patent publication JP-H08-72153 discloses an optical shaping apparatus using additive manufacturing. A transparent feed film is provided as well as a resin deposition unit for depositing a layer of curable resin on a First side of the feed film. The feed film is supported by a transparent support plate. An exposure means is provided on a second side of the feed film for curing the resin layer. A shaping base is provided for holding the stacked resin layers.

International patent publication WO 00/308834 discloses an additive manufacturing system using stereo lithography. A transparent plastic film is used in combination with a resin application means for depositing a curable resin on a first side of the plastic film, Illuminating means are provided at a second side of the plastic film for curing the resin layer. A base is provided for holding the stacked layers.

### Summary of the invention

The present invention seeks to provide an improved additive manufacturing system for manufacturing a three dimensional object as a stacked arrangement of cross sectional layers made of cured resin. The system of the present invention is capable of manufacturing arbitrary large three dimensional objects with high accuracy and resolution independent of the size of the objects.

According to the present invention, an additive manufacturing system as defined above is provided, wherein the system further comprises a masking screen disposed substantially parallel to the resin layer for blocking at least in part incident radiation on the resin layer in correspondence with a cross sectional slice of the object, the positioning system being further arranged for aligning the masking screen and the stage. The masking screen comprises a masking foil disposed substantially parallel to the foil substrate, and the masking foil is interposed between the foil substrate and the support plate. The present system allows to produce three dimensional objects with great accuracy and in an efficient manner. The masking foil itself is (semi-) transparent in correspondence with the masking image needed, and can be produced in advance of the actual additive manufacturing process. Also such a masking foil would possibly allow re-use thereof, further lowering production costs of a 3D object. As the masking foil is interposed between the foil substrate and the support plate, the distance between masking foil and layer to be cured is minimized, resulting in less scattering and exposure errors for the radiation.

The masking screen is a uniform masking screen in a further embodiment, e.g. a uniformly black masking image. In an alternative embodiment, the masking screen is a non-uniform semi-transparent masking screen, which allows to more precisely control the amount of radiation received at every location of the material layer to be cured. E.g. over-exposure due to surrounding areas also being illuminated can be prevented by applying a suitable semi-transparent part of the masking screen at the associated position within the masking image, resulting in an even more precise and uniform curing process.

In a further embodiment, the masking screen comprises a layer of non-transparent material, which non-transparent material is patterned by ablation, e.g. using laser ablation or etching. This is a very efficient process and allows accurate patterning of subsequent layers of the object to be manufactured.

The foil substrate is a plastic foil having a metalized surface layer in a further embodiment, wherein the metalized surface layer is patterned by ablation. The material of the plastic foil is e.g. polypropylene or polyethylene, which is generally known from packaging and thus can be provided at low cost and allows efficient handling.

The masking foil comprises a semi-transparent masking layer in a further embodiment disposed on the first and/or the second side of the masking foil, e.g. in the form of printed layer(s). This provides a low cost masking screen, yet allows a very flexible additive manufacturing process.

In an even further embodiment, the masking foil and foil substrate are movably arranged substantially perpendicular to each other, in order to minimize contact between the foils. Alternatively, the masking foil and foil substrate are movably arranged substantially parallel to each other, which would allow a compact arrangement of a foil supply unit, as both foils can be dispensed on top of each other in the same direction.

The masking screen comprises alignment markers for aligning the masking screen and the stage in a further embodiment. The alignment markers can be positioned anywhere on the masking screen, e.g. in a printed layer, in the foil substrate, the masking foil, etc.

In a further embodiment, the foil substrate comprise a release layer for smoothly releasing a cured resin layer from the foil substrate by the stage. The release layer can be formed on top of the foil substrate, e.g. using a co-extrusion process. Alternatively, the release layer comprises a release coating disposed on the foil substrate, e.g. using a silicon coating.

In the various embodiments mentioned above, the arrangement of the various components of the additive manufacturing system can be dimensioned, such that a distance between the masking screen and the resin layer is smaller than 40 µm. This will allow to obtain a high resolution and high accuracy of the masking image on the layer to be cured.

The resin layer comprises one or more initiators for curing the resin layer, wherein each initiator is sensitive to a predetermined wave length of incident radiation. The initiators are sensitive to electro-magnetic radiation provided by the radiation source, and may comprise infra red (heat radiation), visible light, as well as UV radiation sensitive initiators.

In a further embodiment the resin layer comprises a plurality of resin layers deposited side by side on the foil substrate. The resin layers may be of a similar composition, but advantageously comprises different types of composition. This would e.g. allow to obtain different type of material layers in the object eventually manufactured.

In a further embodiment the transparent support plate is a bendable support plate. Furthermore, the bendable support plate may be connected to an actuator system, the actuator system being arranged to change the bendable support plate from a flat form to a convex form. This allows to take off a cured layer from the foil substrate using the stage with virtually no force, ensuring that the new layer adheres to the rest of the object being formed.

### Short description of drawings

The present invention will be explained in further detail hereinafter based on a number of exemplary embodiments with reference to the drawings, wherein
Figure 1 shows a partial view of a prior art additive manufacturing system;
Figure 2 shows a schematic cross sectional view of an additive manufacturing system according to an embodiment of the present invention;
Figure 3a and 3b show top view of a part of a masking screen as used in the embodiment of Fig. 2;
Figure 4 shows a partial cross sectional view of a further embodiment of the present invention additive manufacturing system;
Figure 5 shows a partial cross sectional view of an alternative embodiment of the present invention additive manufacturing system;
Figure 6 shows a partial cross sectional view of an even further embodiment of the present invention additive manufacturing system;
Figure 7 shows a partial perspective view of yet a further embodiment of the present invention additive manufacturing system in a first position of the transparent support plate; and
Figure 8 shows the perspective view of the embodiment of Figure 7 in a second position of the transparent support plate.

### Detailed description of exemplary embodiments

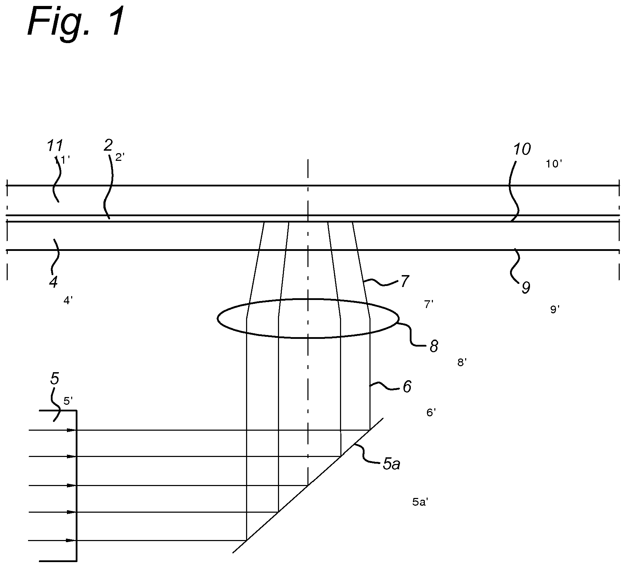

Figure 1 shows a prior art additive manufacturing system 1', comprising a thin transparent foil substrate 2' for supporting a layer of curable resin 11' disposed thereon. Underneath the foil substrate 2' a transparent support plate 4' is provided for supporting the foil substrate 2'. The system 1' further comprises a light source 5' projecting light onto a known Digital Light Processing Chip 5a' (DLP-chip), which reflects a light beam 6' comprising a desired image of a cross sectional object slice toward the foil substrate 2'. Typically, a lens 8' will be disposed in the light path 6' for providing a modified size of the projected image 6' from the DLP-chip. The projected image 6' then passes through the transparent support plate 4' and the foil substrate 2', and finally projects onto the curable resin 11', which cures and solidifies as a result.

As shown in Figure 1, the light paths 6', 7' are subjected to scattering, perturbations, bending etc. due the lens 8' and the surfaces 9', 10' of the support plate 4'. As a result, the accuracy and resolution of the cured cross-sectional resin layer 111' may not be sufficient and satisfactory in certain situations. And because the accuracy and resolution of the reflected image by the DLP-chip is limited as well, the scalability of this type of additive modelling is limited and not suited for larger objects.

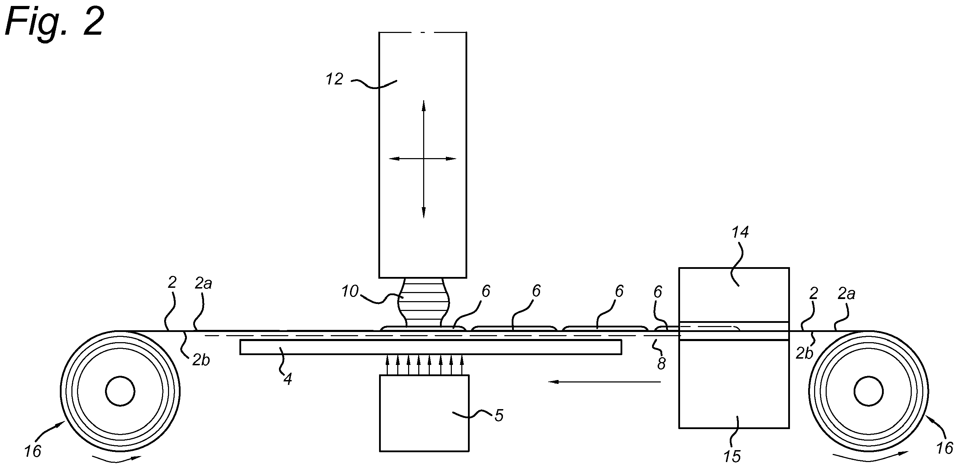

Figure 2 depicts an additive manufacturing system 1 according to a present invention embodiment, wherein the system 1 is adapted to maximize the accuracy and resolution of a cross sectional layer of curable resin 6 to be modelled, independent of its size, such as a width of the cross sectional layer 6. To that end, the system comprises a transparent foil substrate 2 and a resin depositor 14 for depositing a layer of curable resin 6 on a first side 2a of the foil substrate 2. The resin depositor 14 is in many embodiments arranged for providing a substantially uniform layer of curable resin 6 onto the foil substrate 2. In typical embodiments the foil substrate 2 is supported by a transparent support plate 4, such as e.g. a glass support plate 4. On other embodiments the support plate 4 may be of a transparent flexible material.

In further typical embodiments the foil substrate 2 and support plate 4 are moveably arranged with respect to each other, i.e. a slidable arrangement of the foil substrate 2 with respect to the support plate 4 and vice versa. For example, when the system 1 is in operation, the foil substrate 2 is typically moved in a sliding fashion over the support plate 4.

The system 1 further comprises a radiation source 5 disposed on a second side 2b of the foil substrate 2 for radiation curing the resin layer 6 on the first side 2a of the foil substrate. The cured resin layer 6 represents a cross sectional layer or slice of an object 10 to be modelled. Typically, the resin layer 6 may have various thicknesses depending on smoothness and accuracy requirements of the three dimensional model or object 10. It is readily understood that a higher thickness of such a resin layer 6 typically yields a less smooth and accurate representation of the object 10. Conversely, a thinner thickness of the resin layer 6 provides a smoother and more accurate representation of said object 10.

In an embodiment, the radiation source 5 is adapted to emit electro-magnetic waves, or "EM-radiation", or simply "radiation" for curing the curable resin 6. In general embodiments, the EM-radiation may comprise infrared (thermal) radiation, or visible light radiation, or ultraviolet radiation, or any combination thereof. Hence, the EM-radiation emitted by the radiation source 5 lies in an electromagnetic spectrum ranging from infrared toward ultraviolet. In a further alternative variant, the radiation source 5 might even be implemented as a conventional DLP light source. Based on the type of EM-radiation emitted by the radiation source 5, a fluid, slurry-like curable resin 6 then comprises appropriate initiators for initiation of a solidification process of the resin 6 in response to the incident EM-radiation.

In view of the present invention, the term "initiators" shall refer to chemical compounds that are sensitive to infrared photons, visible light photons, or ultraviolet photons emitted by the radiation source 5, wherein the photo initiators are responsible for initiating a solidification processes of the curable resin 6, such as hardness, colour etc. What type of EM-radiation is actually used depends on the modelling application at hand. Furthermore, the term "transparent" shall mean transparent to the radiation as defined above.

According to the invention, the resin layer 6 comprises one or more photo initiators for curing the resin layer 6, wherein each photo initiator is sensitive to a predetermined wave length of incident radiation, such as infrared, visible light, or ultraviolet radiation. This is particular advantageous in view of manipulating solidification process of the curable resin 6, e.g. using a plurality of different photo initiators in the resin layer 6 it is possible to control the solidification process with respect to hardness, stiffness, color and the like. Moreover, in certain embodiments the resin layer 6 may comprise a plurality of resin layers deposited side by side on the foil substrate 2. Each of the resin layers may then comprise different photo initiators as well. Hence, the use of one or more photo initiators, each being sensitive to different types of radiation, possible in conjunction with a plurality resin layers, provides great flexibility of the additive manufacturing system 1 of the present invention.

The system 1 of the present invention further comprises a stage 12 configured to hold a stacked arrangement of one or more cured resin layers representing at least in part the three dimensional object 10. As depicted, in most embodiments the stage 12 is movably disposed relative to the support plate 4, typically perpendicular to the support plate 4 for pulling a cured resin layer 6 away from the foil substrate 2. Such a cured resin layer 6 forms a cross sectional slice of the object 10 being additively manufactured by stacking one or more of such cured resin layers 6 and pulling each of such a cured layer away from the foil substrate 2 once the solidification process has finished. The stage 12 is also arranged to bring the object 10 back into contact with a 'fresh' resin layer before exposure to radiation, i.e. at a set and accurate distance from the foil substrate 2, after which the cycle can be repeated again. In this way a stacked arrangement of adhesively and/or fused cured resin layers is obtained representing the three dimensional object 10.

In order to accurately align the cross sectional cured resin layers with respect to each other, the system 1 further comprises a positioning system for relative positioning the foil substrate 2 and the stage 12. In many embodiments the positioning system typically comprises known actuators for relatively moving the foil substrate 2 and the stage 12 with respect to each other.

In many embodiments, the system 1 of the present invention may further comprises a foil handling system 16 for supplying, moving, and receiving the foil substrate 2. In the depicted embodiment, the foil handling system 16 comprises a foil supply roll and foil receiving roll, which are rotatably arranged for move the foil substrate 2 along the support plate 4 and stage 12.

As outlined earlier, many prior art additive manufacturing systems as depicted in Figure 1 suffer from a lack of scalability, which means that the accuracy and resolution of the objects modelled with such systems is highly dependent on the size of the object. Because the DLP-chip used in these systems provides a reflected light beam comprising a cross sectional image with limited resolution, using lenses to enlarge or "blow up" the image decreases the accuracy and resolution over an area of the foil substrate. As a result, the prior art additive manufacturing systems are not suitable for manufacturing larger objects.

According to the present invention, the accuracy and resolution of a projected cross sectional image onto the curable resin can be significantly improved by eliminating most of the scattering, lens refractions, and various perturbations of the projected EM-radiation from the radiation source to the curable resin on the foil substrate.

Referring to Figure 1, to that end the additive manufacturing system 1 further comprises a masking screen 8 disposed substantially parallel to the resin layer 6 for blocking at least in part incident radiation on the resin layer 6 in correspondence with a cross sectional slice of the object 10, wherein the positioning system is further arranged for aligning the (underside of) masking screen 8 and the stage 12.

The masking screen 8 has the surprising advantage that the projected cross sectional image of EM-radiation onto the curable resin 6, i.e. curable resin layer 6, is very accurate. As a result of this set-up, the object 10 can be any size, and is not in any way limited by the dimensions available for the masking screen 8. The masking screen 8 merely passes a portion of emitted radiation corresponding to a desired cross sectional image during a particular resin layer solidification cycle. The resolution and accuracy of the projected cross sectional image therefore depends on the resolution and accuracy of the masking screen 8. The use of DLP-chips is thus avoided and masking screens 8 for blocking at least in part incident radiation can have, in essence, arbitrarily large accuracy and resolution, regardless of the size of the object 10. Additively manufacturing objects ranging in size from millimetres to meters is possible.

Additionally, the use of intermediate lenses is not required and unwanted lens aberrations, and various other disturbances and perturbations of the projected cross sectional image are minimized.

In advantageous groups of embodiments, the masking screen 8 is positioned as close as possible to the deposited layer of curable resin 6 on the foil substrate 2, thereby eliminating most of the disturbances that could distort the cross sectional image projected onto the curable resin 6. In a specific embodiment, a distance between the masking screen 8 and the resin layer is smaller than 40 µm.

In a specific embodiment, the masking screen 8 is printed on the foil substrate 2, using a printer 15 as shown in Figure 2. In the embodiment shown, the printer 15 is positioned opposite the depositor 14, but other arrangements are possible, e.g. where (in relation to the moving foil substrate 2), the depositor 14 is positioned after, i.e. downstream of, the printer 15. In an exemplary set-up, the depositor 14 is positioned close to the stage 12, i.e. the layer of curable resin 6 is deposited on the foil substrate 2 near to the position where the object 10 is manufactured. On the opposite side of the stage 12, a recuperating system can be positioned, which collects the unused curable resin 6 from the foil substrate 2. The printer 15 can then be positioned at a suitable location nearer to the foil handling system 16.

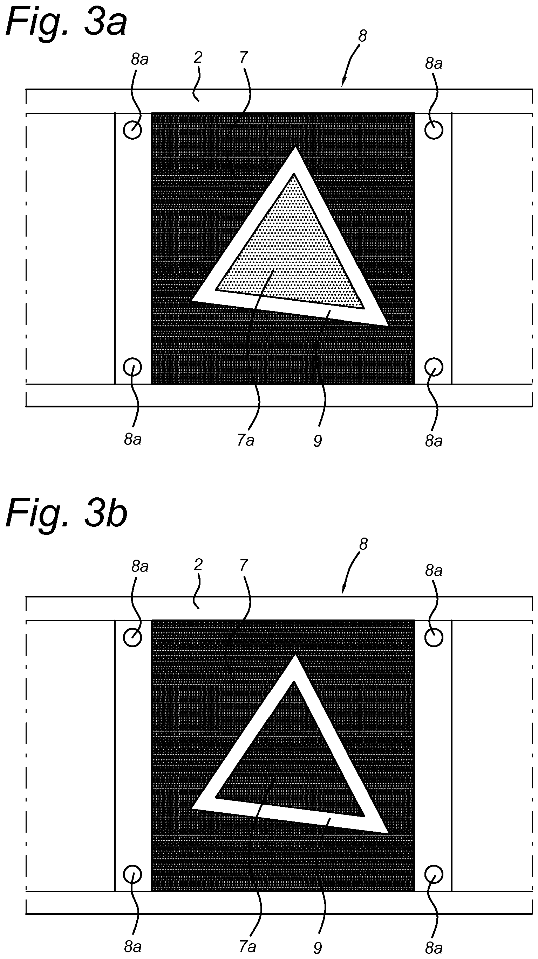

Figure 3a and 3b depict top views of a foil substrate 2 according to present invention embodiments. Typically, the foil substrates 2 each comprise a masking screen 8 providing a masking area 7 and/or transparent area 9. The transparent area 9 provides maximum transparency to incident radiation for curing deposited curable resin 6 on the foil substrate 2, whereas the masking area 7 provides non-transparent masking or semi-transparent masking.

According to the invention, Figure 3a depicts an embodiment of a non-uniform, semi-transparent masking screen 8. The masking screen 8 comprises a non-uniform, semi-transparent masking area 7, 7a, 9 so that incident radiation is not uniformly blocked. In the outer part 7 of the shape all radiation is blocked, while in the inner part 9, 7a, radiation is passed and curing occurs with exposure. This allows to accurately control the amount of radiation passed onto the curable resin, and take into account that is certain areas the radiation needs some tempering, e.g. when adjacent pixels are also transparent. As a result, the solidification process can be accurately controlled across the curable resin deposited on the foil substrate 2. In a further embodiment, the semitransparency of the masking area 7, 7a even changes gradually towards the transparent area 9.

Figure 3b depicts an embodiment of a uniform masking screen 8 In this embodiment, the masking area 7, 7a is a uniform, non-transparent masking area 7, 7a and is adapted to fully block incident radiation. In this case the incident radiation is only projected onto the curable resin 6 over the transparent area 9, yielding substantially fast solidification of the curable resin in the transparent area 9, whereas the curable resin in the blocking area 7 remains fluidized or slurry-like. When applying this masking screen 8 in subsequent exposures, a thin walled column will result as object 10, as opposed to the masking screen 8 of Fig. 3b, which would result in a column as object 10.

According to the invention, the masking screen 8 may comprise a layer of non-transparent material, which non-transparent material is patterned by ablation, such as laser ablation. In this embodiment the masking screen is 8 is obtained by first providing a fully non-transparent blocking area 7 and no transparent area 9. Using an ablation process, such as laser ablation, the transparent area 9 is created. Note that ablation, i.e. removal, can be performed very accurately and so the accuracy and resolution of the cross sectional image defined by the transparent area 9 can be as accurate as the removal process allows it to be.

Returning to Figure 2, and as disclosed earlier, the masking screen 8 of the present invention is advantageously disposed as close as possible to the deposited curable resin 6 to minimize various disturbances of the radiated cross sectional image onto the curable resin 6 when the system 1 is in operation.

In an advantageous embodiment, the foil substrate 2 comprises the masking screen 8. Since the foil substrate 2 now comprises the masking screen 8, the distance between the curable resin 6 on the foil substrate 2 and the masking screen 8 is extremely small, eliminating all possible radiation disturbance sources between the masking screen 8 and the radiation source 5. This provides a major advantages over DLP-chip systems. For example, as the masking screen 8 ultimately defines the cross sectional image to be cured, any disturbances of the radiation path between the radiation source 5 and the masking screen 8 will have no effect on the accuracy and resolution of the projected cross sectional image. For example, in case the emitted radiation is visible light, disturbances and perturbations caused to the light path by the transparent support plate 4 and/or any lenses will have no effect on the accuracy and resolution of the projected cross sectional image.

In another embodiment, the masking screen 8 comprises a masking layer disposed on the first side 2a of the foil substrate 2. In another embodiment, the masking screen 8 comprises a masking layer disposed on the second side 2b of the foil substrate 2. In yet another embodiment, the masking screen 8 comprises a masking layer disposed on the first side 2a and the second side 2b of the foil substrate 2. These embodiments of the masking screen 8 provide a very robust and reliable additive manufacturing system 1. The cross sectional image or slice defined by the masking screen 8 is not influenced by the transparent support plate 4 and/or any other sources of radiation path disturbances (e.g. lenses) interposed between the masking screen 8 and the radiation source 5.

Typically, the highest accuracy and resolution of the projected cross sectional image is obtained when the masking screen 8 comprises a masking layer disposed on the first side 2a, which is logical as the deposited curable resin 6 resides thereon. The distance between the curable resin 6 and the masking screen 8 is minimized in this case. On the other hand, when the masking screen 8 only comprises a masking layer disposed on the second side 2b, then the transparent foil substrate 2 itself will be the only radiation path disturbance. However, since the foil substrate 2 is thin, for example between 20 and 40 µm, any distortion of the projected cross sectional image caused by the foil substrate 2 will be negligible compared to the accuracy and resolution of the masking screen 8 itself.

In an embodiment, the foil substrate 2 is a plastic foil 2 (such as polypropylene or polyethylene) having a metalized surface layer, and wherein the metalized surface layer is patterned by ablation. This embodiment is a natural extension of the previous embodiments, wherein the masking screen 8 comprises at least one masking layer on the first or the second side 2a, 2b of the foils substrate 2. Manufacturing a plastic foil 2 having a metalized surface is well-known, and treating such a foil 2 with an accurate ablation method, a cost effective yet highly accurate masking screen 8 can be produced.

On a further note with respect to Figure 3a and 3b, in advantageous embodiments the masking screen 8 may further comprise alignment markers 8a for aligning the masking screen 8 and the stage 12. These alignment markers 8a can be anywhere on the masking screen 8, such as in masking layers disposed on one of the sides of the foils substrate 2 and/ or embedded in the foil substrate 2 etc.

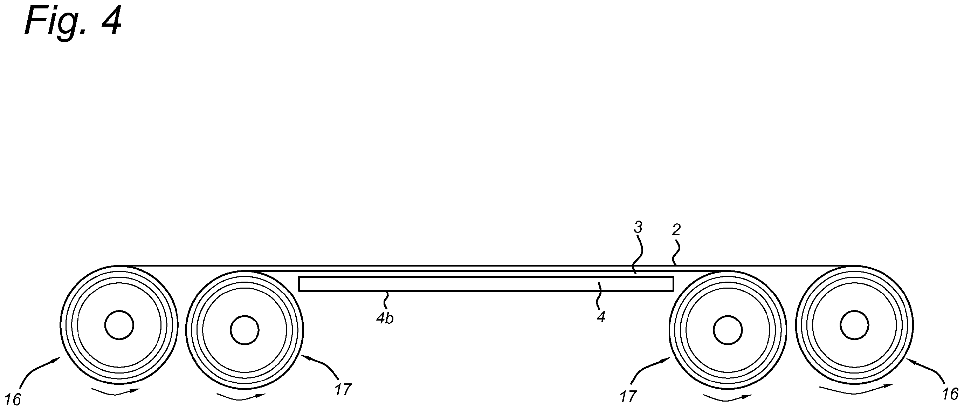

Figure 4 shows a partial side view of an additive manufacturing system 1 according to a further present invention embodiment. In the embodiment shown, the masking screen 8 comprises a masking foil 3 disposed substantially parallel to the foil substrate 2. Having a separate masking foil 3 is advantageous in certain ways. For example, in previous embodiments wherein a masking screen 8 comprises a masking layer disposed on one of the sides 2a, 2b of the foil substrate 2, the material of the foil substrate 2 has to allow for proper bonding of such a masking layer as well as the separation of the solidified resin from said substrate 2. Having a separate masking foil 3 eliminates such particular problem, and in essence the masking screen 8 is then embedded in the masking foil 3 instead, wherein the masking foil 3 is of semi-transparent material in correspondence with the masking image, i.e. the cross sectional image or slice to be manufactured. As a result, no masking layer on one of the sides of the masking foil 3 are required. However, not all applications may benefit from such a masking foil 3. So in an embodiment, the masking foil may also comprise a semi-transparent masking layer disposed on the first and/or the second side 3a, 3b of the masking foil 3. The semi-transparent masking layer may be uniform or non-uniform, i.e. gradually changing transparency, as explained earlier. In another embodiment, the masking foil 3 comprises a non-transparent masking layer disposed on the first and/or the second side 3a, 3b of the masking foil 3. In this embodiment the masking layer completely blocks emitted radiation from the radiation source 5.

In the embodiment of Figure 4, the masking foil 3 may be interposed between the foil substrate 2 and the support plate 4, thereby minimizing the distance between the foil substrate 2 and the masking foil 3, and, in turn, minimizing the effect of radiation path disturbances, aberrations etc. between the masking screen 8 and the deposited curable resin 6 on the foils substrate 2.

Although not shown, should friction and interference issues between de foil substrate 2 and masking foil 3 be of any concern, then there is an alternative embodiment wherein the masking foil 3 is disposed on an opposing side 4b of the support plate 4 with respect to the foil substrate 2. In this embodiment, possible radiation path aberrations between the masking screen 8 and the curable resin 6 may increase due to the interposed transparent support plate 4. However, compared to the accuracy and resolution of the masking screen 8 and the projected masking image created therewith, the accuracy and resolution of the projected cross sectional image onto the curable resin 6 is still considerably better than a DLP-chip based additive manufacturing system 1. So having the support plate 4 interposed between the foils substrate 2 and the masking foil 3 has minimal impact on the projected cross sectional image.

In the embodiment shown in Figure 4, the masking foil 4 and foil substrate 2 are movably arranged substantially parallel to each other. This provides a compact arrangement, such as a compact foil supply unit 16, 17 that dispenses both foils on top of each other in the same direction. Even though this provides a compact system, it may increases contact resistance between the foils substrate 2 and masking foil 3.

In an alternative embodiment, the masking foil 4 and foil substrate 2 are movably arranged substantially perpendicular to each other. This embodiment is not shown, but is should be clear that in this case the foils substrate 2 and masking foil 3 have a smallest contact area that minimizes friction between the foils.

As mentioned earlier, once curing of the curable resin 6 has been completed, the curable resin 6 is a solidified resin layer to be pulled away from the foil substrate 2 in order to make room for a new layer of curable resin 6. To improve resin release properties of the foil substrate 2 it may be desirable provide the foils substrate 2 with a dedicated release layer which is in direct contact with the curable resin. So in certain embodiments the foil substrate 2 may comprise a release layer for improving smooth separation of a solidified resin layer and the foil substrate 2.

In an embodiments the release layer may also function as a masking layer and vice versa. In a further embodiment the release layer may be co-extruded. Hence the foils substrate 2 may comprise a co-extruded release layer for improving the separation of a solidified resin layer and the foil substrate by the stage 12. In yet another embodiment, the release layer comprises a release coating disposed on the foil substrate 2. , such as a release coating comprising silicon.

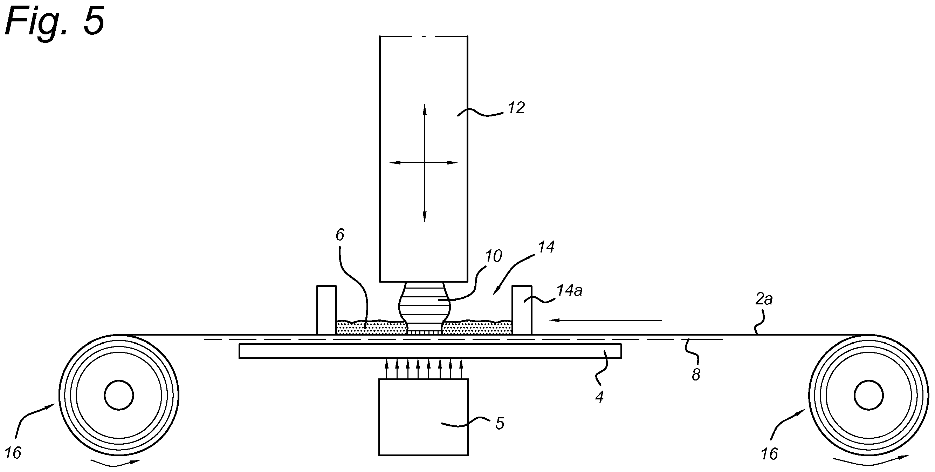

Figure 5, shows a partial embodiment of the system 1 of the present invention, wherein the resin depositor 14 (or vat) is embodied as a reservoir storing an amount of fluid, slurry-like curable resin 6. The resin depositor 14 comprises a circumferential wall 14a enclosing a part of the object 10 to be modelled and further comprises an open bottom 14b for allowing the curable resin 6 to come into contact with the foil substrate 2. In essence the resin depositor 14 is a ring-like element disposed above the support plate 4 for allowing the foil substrate 2 to move underneath said resin depositor 14.

In operation the curable resin 6 solidifies according to the masking screen 8 being used. Once solidified, the cured resin layer 6 is pulled away from the foils substrate 2 by means of the stage 12, leaving a gap between the object 10 and the foils substrate 2. The foil substrate 2 is moved in a sliding fashion for bringing a new masking screen 8 in the radiation path (not shown). The gap between the object 10 and the foil substrate is subsequently filled with fresh curable resin 6 through the motion of the foil substrate 2. A new cross sectional layer or slice of the object 10 can now be manufactured by exposing the mask screen 8 to radiation emitted by the radiation source 5.

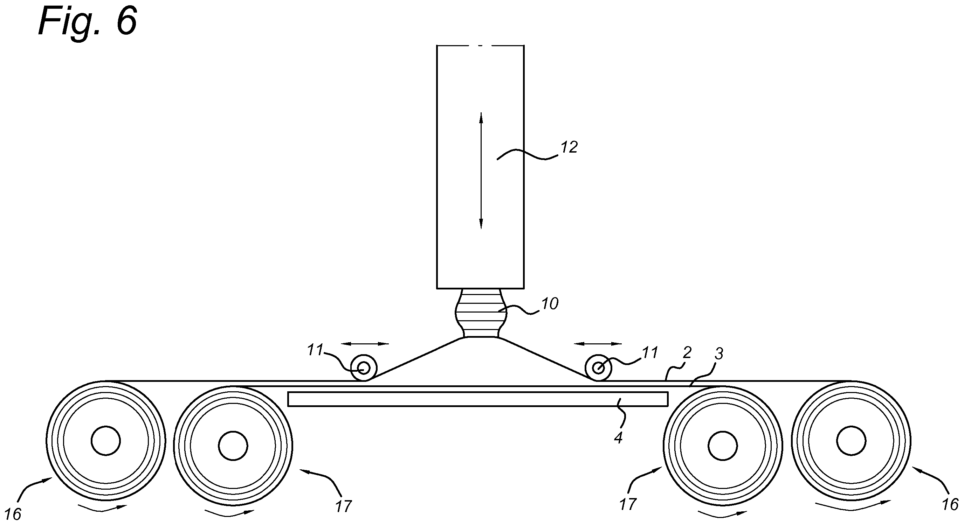

Figure 6 shows another partial embodiment of the additive manufacturing system 1 according to the present invention. In this particular embodiment the system 1 further comprises a plurality of separation rolls 11 for pulling down the foil substrate 2 when the stage 12 attempts to separate the object 10 from the foil substrate 2. Due to adhesive and/or vacuum forces between the object 10 and the foil substrate 2, moving the object 10 away from the support plate 4 generally pulls the foils substrate 2 in the direction of the stage 12 as well.

In this embodiment, the separation rolls 11 are configured for immobilising the foil substrate 2 in a direction substantially perpendicular to the support plate 4. In advantageous embodiments the separation rolls 11 are also adjustable substantially parallel to the support plate 4 as indicated in Figure 6.

The separation rolls 11 according to the invention are thus configured for imposing an optimal peeling angle between the foil substrate 2 and the object 10 during a separation cycle of the system 1, thereby allowing for reliable separation of the foil substrate 2 and the object 10 without damaging said substrate 2 and/or object 10.

As mentioned earlier, a particular problem related to separating the foil substrate 2 from a cured resin layer often involves considerable pulling forces from the stage 12 onto the object 10 as well as the foil substrate 2 and/or support plate 4. First, a cured resin layer typically sticks to the foil substrate 2 due to adhesive forces between the cured resin layer and the foil substrate 2. Second, while separating a newly cured resin layer and the foil substrate 2, a vacuum is created there between and so are suction forces pulling the object 10 and foil substrate 2 together.

In addition to separation issues, another potential problem relates to moving the object 10 toward the foil substrate 2 for commencing a new solidification cycle. For such a new solidification cycle, a fresh layer of curable resin 6 is deposited on the foil substrate 2 having a thickness which is larger than a thickness of a newly cured resin layer. Consequently, while positioning the object 10 close to the foil substrate 2, typically within a distance of 20 to 50 um thereto, excess curable resin 6 is pushed from the gap between the object 10 and the foil substrate 2, creating large forces that potentially damage the object 10, the foil substrate 2 and/or the support plate 4.

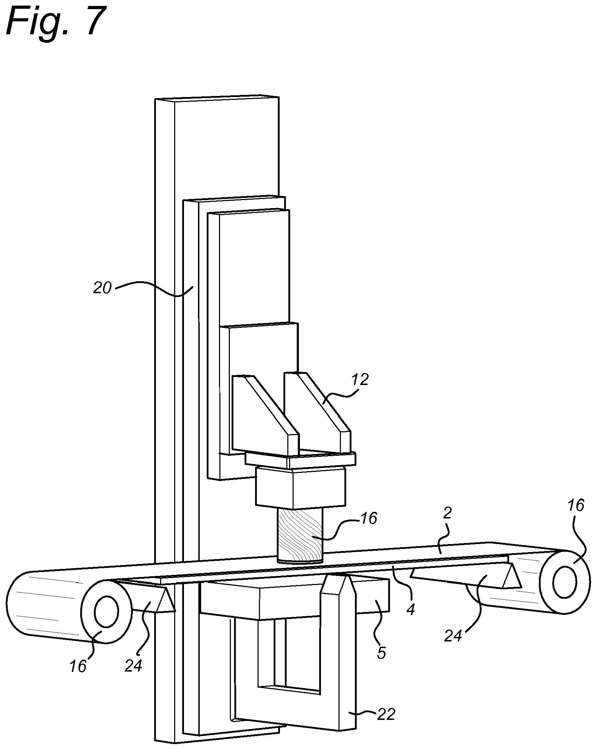

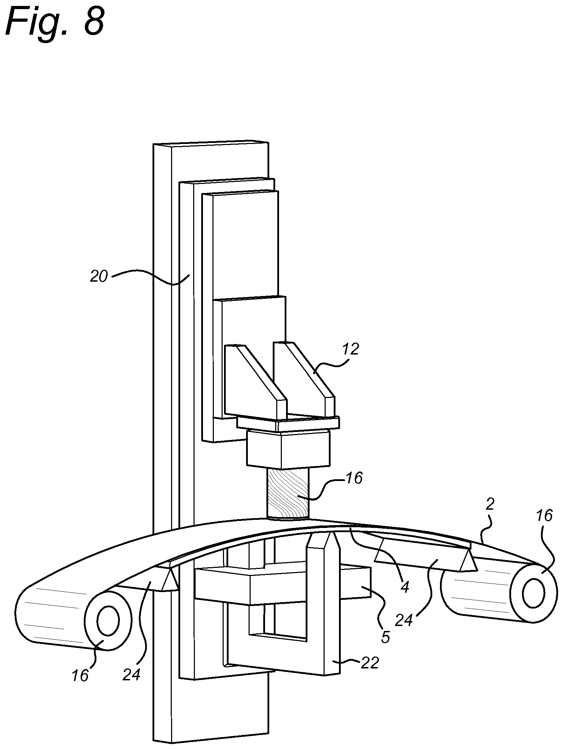

Figure 7 and Figure 8 show embodiments of the additive manufacturing system 1 addressing the above mentioned issues.

Figure 7 shows an additive manufacturing system 1 in a first configuration according to present invention embodiment. In this embodiment, the system 1 comprises a moveable actuator system 22 on an opposing side (typically underneath) of the support plate 4. The foil substrate 2 is movably disposed on the support plate 4. In most embodiments, the actuator system 22 is positioned substantially midway of the support plate 4, and the actuator system 2 may in certain embodiments be fixedly connected to the moveable stage 12, 20, and thus moves in sync therewith. Support points 24 are provided on each end of the support plate 4 for supporting the support plate 4, e.g. keeping it substantially horizontal. Further, the transparent support plate 4 is a bendable support plate 4. The support plate 4 is adapted to bend upward or downward between the support points 24 (i.e. concave or convex). More particularly, in an embodiment the bendable support plate 4 is connected to the actuator system 22, wherein the actuator system 22 is arranged to change the bendable support plate 4 from a flat form to a convex form.

Figure 8 shows an additive manufacturing system 1 in a second configuration according to a present invention embodiment. In this configuration the support plate 4 is in a convex form, wherein the support plate 4 remains in contact with the support points 24. The stage 12, 20, the object 10 and the actuator system 22 have moved toward a different position relative to their position in the first configuration of Figure 7. In this embodiment the actuator system 22 and the support point 24 retain the support plate 4 is the depicted convex form.

According to the present invention, the additive manufacturing system 1 depicted in Figure 7 and Figure 8 solve the above mentioned force issues between the object 10 and the foil substrate 2 as follows.

The first configuration of Figure 7 corresponds to a finished solidification cycle of a curable resin layer on the foil substrate 2, where the curable resin layer is not shown. To allow for a new cross sectional layer or slice of the object 10 to be manufactured, the object 10, now comprising a newly cured cross sectional resin layer, must be separated from the foil substrate 2. To that end the stage 12, 20 as well as the actuator system 22 move toward their respective positions in the second configuration as depicted in Figure 8, where the support plate 4 is in a convex form.

Due to the convex form of the support plate 4, hence the convex form of the foils substrate 2, the foil substrate 2 is effectively peeled from the object 10, thereby facilitating separation of the foil substrate 2 and the object 10. Furthermore, the convex form of the foil substrate 2 also prevents a vacuum from being created between the object 10 and the foil substrate 2 while moving the stage 12 further away from the support plate 4. Separation forces between the foil substrate 2 and the object 10 have therefore been reduced significantly.

Once the separation cycle has completed, as shown in Figure 8, a new solidification cycle can be started by sliding the foil substrate 2 into a new position, wherein a fresh layer of curable resin is positioned underneath the object 10. The stage 12 and object 10 are then moved toward the foil substrate 2 whilst the support plate 4 remains in the convex form. The object 10 approaches the foil substrate 2 leaving a required gap there between. The gap is subsequently filled with the fresh layer of curable resin, wherein the wedge shaped gap allows for easier movement of excess curable resin from the gap. Finally, the stage 12, 20, the object 10 as well as the actuator system 22 are then moved downward in sync toward the first configuration as shown in Figure 7. The convex form of the support plate further eliminates possible enclosure of air pockets in the fresh layer of curable resin whilst moving from the system 1 from the second configuration toward the first configuration.

In an alternative embodiment of Figure 7 and 8, the support points 24 are moveably disposed whereas the actuator system 22 remains stationary. This embodiment is also capable of bending the support plate 4 into a convex form yet allow for the separation and approaching steps disclosed above.

The present invention embodiments have been described above with reference to a number of exemplary embodiments as shown in the drawings. Modifications and alternative implementations of some parts or elements are possible, and are included in the scope of protection as defined in the appended claims.

## Claims

1. Additive manufacturing system for manufacturing a three dimensional object, comprising:
a transparent foil substrate (2) and a resin depositor (14) for depositing a layer of curable resin (6) on a first side (2a) of the foil substrate, the foil substrate being supported by a transparent support plate (4);
a radiation source (5) disposed on a second side (2b) of the foil substrate for radiation curing the resin layer (6) on the first side (2a) of the foil substrate (2), wherein a cured resin layer (6) represents a cross sectional slice of the object (10);
a stage (12) configured to hold a stacked arrangement of one or more cured resin layers representing at least in part the three dimensional object (10); and
a positioning system for relative positioning the foil substrate (2) and the stage (12); wherein the system (1) further comprises
a masking screen (8) disposed substantially parallel to the resin layer (6) for blocking at least in part incident radiation on the resin layer (6) in correspondence with a cross sectional slice of the object (10),
the positioning system being further arranged for aligning the masking screen (8) and the stage (12), **characterized in that** the masking screen (8) comprises a masking foil (3) disposed substantially parallel to the foil substrate (2),
and wherein the masking foil (3) is interposed between the foil substrate (2) and the support plate (4).

2. Additive manufacturing system according claim 1, wherein the masking screen (8) is a uniform masking screen.

3. Additive manufacturing system according claim 1, wherein the masking screen (8) is a non-uniform semi-transparent masking screen.

4. Additive manufacturing system according to claim 1, wherein the masking screen (8) comprises a layer of non-transparent material, which non-transparent material is patterned by ablation.

5. Additive manufacturing system according to any one of claims 1-4, wherein the foil substrate (2) is a plastic foil having a metalized surface layer, and wherein the metalized surface layer is patterned by ablation.

6. Additive manufacturing system according to any one of claims 1-5, wherein the masking foil (3) comprises a semi-transparent masking layer disposed on the first and/or the second side of the masking foil (3).

7. Additive manufacturing system according to any one of claims 1-6, wherein the masking foil (3) and foil substrate (2) are movably arranged substantially perpendicular to each other.

8. Additive manufacturing system according to any one of claims 1-6, wherein the masking foil (3) and foil substrate (2) are movably arranged substantially parallel to each other.

9. Additive manufacturing system according to any one of claims 1-8, wherein the masking screen (8) comprises alignment markers (8a) for aligning the masking screen (8) and the stage (12).

10. Additive manufacturing system according to any one of claims 1-9, wherein the foil substrate (2) comprise a release layer.

11. Additive manufacturing system according to claim 10, wherein the release layer comprises a release coating disposed on the foil substrate (2).

12. Additive manufacturing system according to any one of claims 1-11, wherein a distance between the masking screen (8) and the resin layer (6) is smaller than 40 micron.

13. Additive manufacturing system according to any of claims 1-12, wherein the resin layer (6) comprises a plurality of resin layers (6) deposited side by side on the foil substrate (2).

14. Additive manufacturing system according to any one of claims 1-13, wherein the transparent support plate (4) is a bendable support plate (4).

15. Additive manufacturing system according to claim 14, wherein the bendable support plate (4) is connected to an actuator system (22, 24), the actuator system (22, 24) being arranged to change the bendable support plate (4) from a flat form to a convex form.

## Patentansprüche

1. Additives Fertigungssystem zur Herstellung eines dreidimensionalen Objektes, mit:
einem transparenten Foliensubstrat (2) und einem Harzabscheider (14) zur Abscheidung einer Schicht eines aushärtbaren Harzes (6) auf einer ersten Seite (2a) des Foliensubstrates, wobei das Foliensubstrates durch eine transparente Unterstützungsplatte (4) unterstützt wird;
einer Strahlungsquelle (5), die auf einer zweiten Seite (2b) des Foliensubstrates zur Strahlungsaushärtung der Harzschicht (6) auf der ersten Seite (2a) des Foliensubstrates (2) angeordnet ist, wobei eine ausgehärtete Harzschicht (6) eine Querschnittsscheibe des Objektes (10) repräsentiert;
einer Plattform (12), die dazu eingerichtet ist, eine gestapelte Anordnung von einer oder mehreren ausgehärteten Harzschichten zu halten, die zumindest teilweise das dreidimensionale Objekt (10) repräsentieren; und
einem Positioniersystem zur relativen Positionierung des Foliensubstrates (2) und der Plattform (12); wobei das System (1) ferner umfasst:
einen Maskenschirm (8), der im Wesentlichen parallel zu der Harzschicht (6) zur zumindest teilweisen Blockung der auf die Harzschicht (6) einfallenden Strahlung in Übereinstimmung mit einer Querschnittsscheibe des Objektes (10) angeordnet ist,
das Positioniersystem ferner zur Ausrichtung des Maskenschirmes (8) und der Plattform (12) angeordnet ist,
**dadurch gekennzeichnet, dass**
der Maskenschirm (8) eine Maskenfolie (3) umfasst, die im Wesentlichen parallel zu dem Foliensubstrat (2) angeordnet ist,
und wobei die Maskenfolie (3) zwischen dem Foliensubstrat (2) und der Unterstützungsplatte (4) eingebracht ist.

2. Additives Fertigungssystem nach Anspruch 1, wobei der Maskenschirm (8) ein gleichförmiger Maskenschirm ist.

3. Additives Fertigungssystem nach Anspruch 1, wobei der Maskenschirm (8) ein nicht-gleichförmiger halbtransparenter Maskenschirm ist.

4. Additives Fertigungssystem nach Anspruch 1, wobei der Maskenschirm (8) eine Schicht eines nicht transparenten Materiales umfasst, dass ein durch Ablation strukturiertes nicht transparentes Material ist.

5. Additives Fertigungssystem nach einem der Ansprüche 1 bis 4, wobei das Foliensubstrat (2) eine Plastikfolie mit einer metallisierten Oberflächenschicht ist, und wobei die metallisierte Oberflächenschicht durch Ablation strukturiert ist.

6. Additives Fertigungssystem nach einem der Ansprüche 1-5, wobei die Maskenfolie (3) eine halbtransparente Maskenschicht umfasst, die auf der ersten und/oder der zweiten Seite der Maskenfolie (3) angeordnet ist.

7. Additives Fertigungssystem nach einem der Ansprüche 1-6, wobei die Maskenfolie (3) und das Foliensubstrat (2) im Wesentlichen senkrecht zueinander beweglich angeordnet sind.

8. Additives Fertigungssystem nach einem der Ansprüche 1-6, wobei die Maskenfolie (3) und das Foliensubstrat (2) im Wesentlichen parallel zueinander beweglich angeordnet sind.

9. Additives Fertigungssystem nach einem der Ansprüche 1-8, wobei der Maskenschirm (8) Ausrichtungsmarkierungen (8a) zur Ausrichtung des Maskenschirmes (8) und der Plattform (12) umfasst.

10. Additives Fertigungssystem nach einem der Ansprüche 1-9, wobei das Foliensubstrat (2) eine Trennschicht umfasst.

11. Additives Fertigungssystem nach Anspruch 10, wobei die Trennschicht eine auf dem Foliensubstrat (2) angeordnete Trennbeschichtung umfasst.

12. Additives Fertigungssystem nach einem der Ansprüche 1-11, wobei ein Abstand zwischen dem Maskenschirm (8) und der Harzschicht (6) kleiner als 40 µm ist.

13. Additives Fertigungssystem nach einem der Ansprüche 1-12, wobei die Harzschicht (6) eine Vielzahl von Harzschichten (6) umfasst, die Seite an Seite auf dem Foliensubstrat (2) abgeschieden sind.

14. Additives Fertigungssystem nach einem der Ansprüche 1-13, wobei die transparente Unterstützungsplattform (4) eine biegbare Unterstützungsplattform (4) ist.

15. Additives Fertigungssystem nach Anspruch 14, wobei die biegbare Unterstützungsplattform (4) mit einem Aktuatorsystem (22, 24) verbunden ist, wobei das Aktuatorsystem (22, 24) dazu angeordnet ist, die biegbare Unterstützungsplattform (4) von einer flachen Form in eine konvexe Form zu ändern.

## Revendications

1. Système de fabrication additive, destiné à la fabrication d'un objet tridimensionnel, comprenant :
un substrat en film transparent (2) et un déposant de résine (14) destiné à déposer une couche de résine durcissable (6) sur un premier côté (2a) du substrat en film, le substrat en film étant supporté par une plaque de support transparente (4) ;
une source de rayonnement (5) disposée sur un second côté (2b) du substrat en film et destinée à durcir par rayonnement la couche de résine (6) sur le premier côté (2a) du substrat en film (2), une couche de résine durcie (6) représentant une tranche en coupe transversale de l'objet (10) ;
une station (12) configurée pour maintenir un empilement d'une ou de plusieurs couches de résine durcies représentant au moins en part l'objet tridimensionnel (10) ; et
un système de positionnement destiné à positionner relativement le substrat en film (2) et la station (12) ; le système (1) comprenant en outre
un écran de masquage (8) disposé sensiblement parallèlement à la couche de résine (6) pour bloquer au moins en partie un rayonnement incident sur la couche de résine (6) en correspondance avec une tranche en coupe transversale de l'objet (10),
le système de positionnement étant en outre adapté pour aligner l'écran de masquage (8) et la station (12),
**caractérisé en ce que**
l'écran de masquage (8) comprend un film de masquage (3) disposé sensiblement parallèlement au substrat en film (2),
et **en ce que** le film de masquage (3) est interposé entre le substrat en film (2) et la plaque de support (4).

2. Système de fabrication additive selon la revendication 1, dans lequel l'écran de masquage (8) est un écran de masquage uniforme.

3. Système de fabrication additive selon la revendication 1, dans lequel l'écran de masquage (8) est un écran de masquage semi-transparent non uniforme.

4. Système de fabrication additive selon la revendication 1, dans lequel l'écran de masquage (8) comprend une couche de matière non transparente, laquelle matière non transparente est modelée par ablation.

5. Système de fabrication additive selon l'une quelconque des revendications 1 à 4, dans lequel le substrat en film (2) est un film en plastique ayant une couche de surface métallisée, et dans lequel la couche de surface métallisée est structurée par ablation.

6. Système de fabrication additive selon l'une quelconque des revendications 1 à 5, dans lequel le film de masquage (3) comprend une couche de masquage semi-transparente disposée sur le premier et/ou le second côté du film de masquage (3).

7. Système de fabrication additive selon l'une quelconque des revendications 1 à 6, dans lequel le film de masquage (3) et le substrat en film (2) sont disposés de manière mobile sensiblement perpendiculairement l'un à l'autre.

8. Système de fabrication additive selon l'une quelconque des revendications 1 à 6, dans lequel le film de masquage (3) et le substrat en film (2) sont disposés de manière mobile sensiblement parallèlement l'un à l'autre.

9. Système de fabrication additive selon l'une quelconque des revendications 1 à 8, dans lequel l'écran de masquage (8) comprend des marqueurs d'alignement (8a) destinés à aligner l'écran de masquage (8) et la station (12).

10. Système de fabrication additive selon l'une quelconque des revendications 1 à 9, dans lequel le substrat en film (2) comprend une couche de séparation.

11. Système de fabrication additive selon la revendication 10, dans lequel la couche de séparation comprend un revêtement de séparation disposé sur le substrat en film (2).

12. Système de fabrication additive selon l'une quelconque des revendications 1 à 11, dans lequel une distance entre l'écran de masquage (8) et la couche de résine (6) est inférieure à 40 microns.

13. Système de fabrication additive selon l'une quelconque des revendications 1 à 12, dans lequel la couche de résine (6) comprend une pluralité de couches de résine (6) déposées côte à côte sur le substrat en film (2).

14. Système de fabrication additive selon l'une quelconque des revendications 1 à 13, dans lequel la plaque de support transparente (4) est une plaque de support flexible (4).

15. Système de fabrication additive selon la revendication 14, dans lequel la plaque de support flexible (4) est connectée à un système d'actionnement (22, 24), le système d'actionnement (22, 24) étant adapté pour faire passer la plaque de support flexible (4) d'une forme plate à une forme convexe.
